# EUROPÄISCHE PATENTSCHRIFT

(11) **EP 1 940 751 B1**
(45) Veröffentlichungstag und Bekanntmachung des Hinweises auf die Patenterteilung: **02.03.2011**
(21) Anmeldenummer: 06807158.8
(22) Anmeldetag: 11.10.2006
(51) Int. Cl.: C04B 24/08, C04B 40/00

(54) **FETTSÄUREANHYDRIDE ENTHALTENDE DISPERSIONSPULVER**
DISPERSION POWDER CONTAINING FATTY ACID ANHYDRIDES
POUDRES REDISPERSIBLES CONTENANT DES ANHYDRIDES D'ACIDE GRAS

(30) Priorität: 27.10.2005 DE 102005051589
(43) Veröffentlichungstag der Anmeldung: 09.07.2008
(73) Patentinhaber: Wacker Chemie AG, 81737 München (DE)
(72) Erfinder: WEITZEL, Hans-Peter, 84571 Reischach (DE)
(74) Vertreter: Schuderer, Michael
(86) Internationale Anmeldenummer: PCT/EP2006/067289
(87) Internationale Veröffentlichungsnummer: WO 2007/048707

(56) Entgegenhaltungen:
- EP-A2- 1 193 287
- WO-A-02/30846
- WO-A-92/14449
- WO-A-2004/103928
- WO-A2-2004/054941
- DE-A1- 19 633 131

## Beschreibung

Die Erfindung betrifft in Wasser redispergierbare Polymerpulver-Zusammensetzungen enthaltend Fettsäureanhydride und die Verwendung dieser Pulver in hydraulisch abbindenden Systemen.

Polymerisate auf Basis von Vinylester, Vinylchlorid, (Meth)-acrylatmonomeren, Styrol, Butadien und Ethylen werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate eingesetzt. Zur Hydrophobierung der mineralischen Massen enthalten diese Dispersionspulver in der Regel Fettsäureester und/oder Silane.

Die EP 1193287 A2 betrifft die Verwendung von Pulverzusammensetzungen, welche mindestens einen Carbonsäureester enthalten, zur Hydrophobierung von Baustoffmassen. Aus der WO 02/30846 A1 sind Granulate zur Hydrophobierung bekannt, welche Fettsäuren oder Fettsäureester, gegebenenfalls in Kombination mit Organopolysiloxanen, auf Carrierpartikeln aufgetragen, enthalten. In Wasser redispergierbare, hydrophobierende Additive, welche Fettsäuren oder Fettsäureester enthalten, sind in der WO 2004/103928 A1 beschrieben.

Bei Verwendung der freien Fettsäure besteht häufig die Gefahr, dass die mineralische Masse vorzeitig ansteift und nicht mehr verarbeitbar bleibt. Die gleiche Gefahr besteht auch beim Einsatz der entsprechenden Alkali- oder Erdalkalisalze der Fettsäuren. Um diesen Problemen zu entgehen wird häufig auf die Verwendung von Estern der Fettsäuren zurückgegriffen. Typischerweise sind dies Methyl- oder Ethylester oder Ester von niedermolekularen Polyalkylenglykolen wie Ethylenglykol, DiEthylenglykol und ähnliche Verbindungen. Allen diesen Verbindungen ist gemein, dass sie unter alkalischen Bedingungen verseifen, dadurch hydrophobierend wirken, aber gleichzeitig unerwünschte emissionsrelevante Stoffe wie Methanol, Ethanol oder Ethylenglykol freisetzen.

Die WO 2004/054941 A1 beschreibt Hydrophobierungsmittel auf der Basis von kationischen Fettsäuresalzen, welche gegebenenfalls noch mit funktionellen Gruppen wie Aldehydgruppen substituiert sein können. Aufgrund des Vorliegens in Salzform kommt es zu den obengenannten Nachteilen. Die DE 19633131 A1 beschreibt eine Vielzahl von fettchemischen Verbindungen, welche bei der Herstellung von Gipsmassen diesen zugefügt werden können, oder als Beschichtung auf fertige Gipsbauteile oder Putzgips aufgetragen werden können. In Wasser redispergierbare Polymerpulver-Zusammensetzungen werden in der DE 19633131 A1 nicht behandelt.

Es bestand daher die Aufgabe, ein Dispersionspulver zu entwickeln, das die Nachteile des Stand der Technik vermeidet.

Gegenstand der Erfindung sind in Wasser redispergierbare Polymerpulver-Zusammensetzung, **dadurch gekennzeichnet, dass**
a) mindestens 60 Gew.-% ein oder mehrere wasserunlösliche, filmbildende Basispolymerisate auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide,
b) 0.1 bis 30 Gew.-% von einem oder mehreren Fettsäureanhydriden, und
c) 1 bis 30 Gew.-% von einem oder mehreren Schutzkolloiden, jeweils bezogen auf das Gesamtgewicht der Polymerpulver-Zusammensetzung, enthalten sind.

Geeignete Fettsäureanhydride sind solche von verzweigten oder unverzweigten, gesättigten oder ungesättigten Fettsäuren mit jeweils 8 bis 22 C-Atomen. Es können auch gemischte (unsymmetrische) Anhydride der genannten Fettsäuren eingesetzt werden.

Ebenfalls einsetzbar sind gemischte Anhydride der genannten Fettsäuren mit Carbonsäuren mit 2 bis 6 C-Atomen, wie Essigsäure oder Propionsäure. Bevorzugt werden symmetrische Fettsäureanhydride. Besonders bevorzugt werden symmetrische Fettsäureanhydride von gesättigten oder ungesättigten Fettsäuren mit jeweils 10 bis 18 C-Atomen, beispielsweise Laurinsäure (n-Dodecansäure), Myristinsäure (n-Tetradecansäure), Palmitinsäure (n-Hexadecansäure), Stearinsäure (n-Octadecansäure) sowie Ölsäure (9-Dodecensäure).

Die Herstellung dieser Anhydride erfolgt nach dem Fachmann geläufigen Methoden. Eine bevorzugte Methode ist die Umsetzung eines Säurechlorides mit einer Säure unter Austreiben der freiwerdenden Salzsäure. Auch durch Umsetzung zweier Fettsäuremoleküle mit starker Mineralsäure können Anhydride erhalten werden. Werden hierbei zwei verschiedene Fettsäuren eingesetzt, so erhält man ein Gemisch von symmetrischen und asymmetrischen Anhydriden.

Besonders bevorzugt werden Polymerpulver-Zusammensetzungen mit 0.1 bis 10 Gew.-%, insbesondere 1 bis 5 Gew.-%, Fettsäureanhydrid b).

Für das Basispolymerisat a) geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 13 C-Atomen, beispielsweise VeoVa9^{R} oder VeoVa10^{R} (Handelsnamen der Firma Resolution). Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliziumfunktionelle Comonomere, wie Acryloxypropyltri(alkoxy)- und Methacryloxypropyltri-(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate, welche gegebenenfalls noch die genannten Hilfsmonomere enthalten können.
Bevorzugt werden Vinylacetat-Homopolymerisate;
Mischpolymerisate von Vinylacetat mit 1 bis 40 Gew.-% Ethylen;
Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest wie Vinylpropionat, Vinyllaurat, Vinylester von alpha-verzweigten Carbonsäuren mit 9 bis 13 C-Atomen wie VeoVa9^{R}, VeoVa10^{R}, VeoVa11^{R};
Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten;
Mischpolymerisate mit Vinylacetat, 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat;
Styrol-Acrylsäureester-Copolymerisate, vorzugsweise mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate, vorzugsweise mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.001 bis 0.02 Gew.-%, vorzugsweise 0.001 bis 0.01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.001 bis 0.03 Gew.-%, vorzugsweise 0.001 bis 0.015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Schutzkolloide c) für die Polymerisation sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluss der Polymerisation kann zur Restmonomerentfernung in Anwendung bekannter Methoden nachpolymerisiert werden, im allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Ges.-%.

Zur Herstellung der in Wasser redispergierbaren Polymerpulver-Zusammensetzungen wird die Fettsäureanhydrid-Komponente b) auf beliebige Weise mit der wässrigen Dispersion des Polymerisats a) vermischt, und die Dispersion anschließend getrocknet. Die Trocknung erfolgt beispielsweise mittels Wirbelschichttrocknung, Gefriertrocknung oder Sprühtrocknung. Bevorzugt wird die Sprühtrocknung. Die Sprühtrocknung erfolgt dabei in üblichen Sprühtrocknungsanlagen, wobei die Zerstäubung mittels Ein-, Zwei- oder Mehrstoffdüsen oder eines Rotationszerstäubers erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Des weiteren werden bei der Herstellung der in Wasser redispergierbaren Polymerpulver-Zusammensetzungen noch Schutzkolloide c) als Trocknungshilfsmittel eingesetzt. Die Gruppe geeigneter Trocknungshilfsmittel ist gleich der zuvor genannten Gruppe der Schutzkolloide c) zur Polymerisation. In der Polymerpulver-Zusammensetzung sind 1 bis 30 Gew.-% Schutzkolloid c), bezogen auf deren Gesamtgewicht, enthalten.

Bei der Sprühtrocknung hat sich vielfach ein Gehalt von bis zu 1.5 Gew.-% Antischaummittel, bezogen auf das Basispolymerisat, als günstig erwiesen.

Die Viskosität der zu zerstäubenden Speise wird über den Feststoffgehalt so eingestellt, dass ein Wert von < 1000 mPas (Brookfield-Viskosität bei 20 Umdrehungen und 23°C), bevorzugt < 350 mPas, erhalten wird. Der Feststoffgehalt der zu zerstäubenden Dispersion beträgt > 30 %, bevorzugt > 40 %.

Unabhängig von der Zusammensetzung der in Wasser redispergierbare Polymerpulver-Zusammensetzungen können zur Verbesserung der anwendungstechnischen Eigenschaften während der Trocknung weitere Zusätze zugegeben werden. Weitere, in bevorzugten Ausführungsformen enthaltene, Bestandteile der Polymerpulver-Zusammensetzungen sind beispielsweise Antischaummittel, Pigmente, Schaumstabilisatoren.

Weitere, in bevorzugten Ausführungsformen enthaltene Bestandteile der in Wasser redispergierbaren Polymerpulver-Zusammensetzungen sind organische und anorganische Zusätze. Mögliche Zusätze, welche aber nicht auf die nachfolgend genannten Verbindungen beschränkt sind, können sein: Entschäumer, anorganische oder mineralische Antiblockmittel oder Füllstoffe. Die Zusätze können jeweils mit bis zu 50 Gew.-%, bevorzugt bis 30 Gew.-%, besonders bevorzugt bis 20 Gew.-%, bezogen auf das Gesamtgewicht der in Wasser redispergierbaren Polymerpulver-Zusammensetzungen enthalten sein. Entschäumer sind üblicherweise mit einem Anteil von bis zu 5 Gew.-% in den in Wasser redispergierbaren Polymerpulver-Zusammensetzungen enthalten.

Es können auch anorganische oder mineralische Verbindungen enthalten sein, bevorzugt mit einem Anteil von 5 bis 30 Gew.-% in der in Wasser redispergierbaren Polymerpulver-Zusammensetzung. Diese anorganischen Zusätze erhöhen die Lagerfähigkeit der Polymerpulver-Zusammensetzung durch Verbesserung der Verblockungsstabilität, insbesondere bei Pulvern mit niedriger Glasübergangstemperatur. Beispiele für herkömmliche Antiblockmittel (Antibackmittel) sind Ca- bzw. Mg-Carbonat, Talk, Gips, Kieselsäure, Kaoline, Silicate mit Teilchengrößen vorzugsweise im Bereich von 10 nm bis 100 µm.

Die in Wasser redispergierbaren Polymerpulver-Zusammensetzungen können in den dafür typischen Anwendungsbereichen eingesetzt werden. Sie können alleine oder in Kombination mit herkömmlichen Redispersionspulvern eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Scim-coat, Spachtelmassen, Fußbodenspachtelmassen, Verlaufsmassen, Dichtschlämmen, Fugenmörtel und Farben. Weitere Anwendungen sind Spritzmörtel und Spritzbeton für Bauwerke des Hoch- und Tiefbaues sowie der Auskleidung von Tunnelwänden. Die in Wasser redispergierbaren Polymerpulver-Zusammensetzungen lassen sich auch als Hydrophobierungsmittel für Sand, Lehm, Papier, Textil, natürlichen oder synthetischen Fasern verwenden. Mit den in Wasser redispergierbaren Polymerpulver-Zusammensetzungen lassen sich auch Oberflächen modifizieren oder beschichten, beispielsweise in Coating- und Lackanwendungen.

Überraschenderweise werden mit diesen Polymerpulver-Zusammensetzungen bessere Hydrophobierungseigenschaften erhalten, als mit den mobileren Fettsäureesterderivaten oder den Säuren, die unmittelbar in der wässrigen Phase vorliegen. Obwohl die Fettsäureanhydride weniger wasserlöslich und auch weniger mobil sind, um aus dem organischen Polymer an die Grenzfläche zu gelangen und zu verseifen, werden dennoch hervorragende hydrophobierende Eigenschaften erhalten. Als vorteilhaft erweist sich hierbei, dass aus einem Molekül Anhydrid zwei Moleküle Fettsäuresalz entstehen, die jeweils wirksam sind. Weiterer Vorteil ist, dass keine emissionsrelevanten Verbindungen entstehen.

### Beispiele:

### Pulver:

Die Pulver wurden durch Sprühtrocknung einer polyvinylalkoholstabilisierten Dispersion eines Ethylen-Vinylacetat-Copolymeren unter Zusatz von 6 Gew.-% eines Polyvinylalkoholes mit einem Verseifungsgrad von 88 Mol-% und einer Viskosität nach Höppler von 4 mPas und unter Zusatz des Fettsäurederivates in den angegebenen Mengen hergestellt.

Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Calcium-Magnesium-Carbonat) versetzt.
Pulver P1: Mit 1 Gew.-% Laurinsäureanhydrid
Pulver P2: Mit 4 Gew.-% Laurinsäureanhydrid
Pulver P3: Mit 1 Gew.-% Palmitinsäureanhydrid
Pulver P4: Mit 2 Gew.-% gemischtes Anhydrid aus Laurin- und Essigsäure
Vergleichspulver P5: Mit 1 Gew.-% Methyllaurat als Hydrophobierungsmittel
Vergleichspulver P6: Mit 4 Gew.-% Methyllaurat als Hydrophobierungsmittel

### Ausprüfung:

### Bestimmung der Hydrophobie:

Zur Bestimmung der Hydrophobie wurde eine mineralische Masse aus 30 Gew.-% Zement, 68 Gew.-% Sand und 2 Gew.-% Dispersionspulver angemischt. Nach Zugabe von Wasser wurde ein Prüfkörper hergestellt und getrocknet. Auf diesen Prüfkörper wurde dann mittels Pipette ein Wassertropfen aufgesetzt und die Verweildauer dieses Tropfens auf der Oberfläche gemessen.

**Tabelle 1:**

| Beispiel | t /min |
|---|---|
| Pulver P1 | 130 |
| Pulver P2 | 450 |
| Pulver P3 | 110 |
| Pulver P4 | 105 |
| Vergleichspulver P5 | 100 |
| Vergleichspulver P6 | 420 |

Aus den Daten ist zu erkennen, dass die Hydrophobierung mit den erfindungsgemäßen Produkten gegenüber den Standardprodukten deutlich überlegen ist.

## Patentansprüche

1. In Wasser redispergierbare Polymerpulver-Zusammensetzungen, **dadurch gekennzeichnet, dass**
a) mindestens Gew.-% ein oder mehrere wasserunlösliche, filmbildende Basispolymerisate auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide,
b) 0.1 bis 30 Gew.-% von einem oder mehreren Fettsäureanhydriden, und
c) 1 bis 30 Gew.-% von einem oder mehreren Schutzkolloiden, jeweils bezogen auf das Gesamtgewicht der Polymerpulver-Zusammensetzung, enthalten sind.

2. In Wasser redispergierbare Polymerpulver-Zusammensetzungen nach Anspruch 1, **dadurch gekennzeichnet, dass** ein oder mehrere Fettsäureanhydride von verzweigten oder unverzweigten, gesättigten oder ungesättigten Fettsäuren mit jeweils 8 bis 22 C-Atomen enthalten sind.

3. In Wasser redispergierbare Polymerpulver-Zusammensetzungen nach Anspruch 2, **dadurch gekennzeichnet, dass** unsymmetrische Fettsäureanhydride enthalten sind.

4. In Wasser redispergierbare Polymerpulver-Zusammensetzungen nach Anspruch 3, **dadurch gekennzeichnet, dass** unsymmetrische Fettsäureanhydride von Fettsäuren mit 8 bis 22 C-Atomen und Carbonsäuren mit 2 bis 6 C-Atomen enthalten sind.

5. In Wasser redispergierbare Polymerpulver-Zusammensetzungen nach Anspruch 1 oder 2, **dadurch gekennzeichnet, dass** symmetrische Fettsäureanhydride von gesättigten oder ungesättigten Fettsäuren mit jeweils 10 bis 18 C-Atomen enthalten sind.

6. Verfahren zur Herstellung von in Wasser redispergierbaren Polymerpulver-Zusammensetzungen nach Anspruch 1 bis 5, **dadurch gekennzeichnet, dass** Gemische von wässrigen Dispersionen des Polymerisats a) und des Fettsäureanhydrids b), in Gegenwart des Schutzkolloids c), getrocknet werden.

7. Verwendung der in Wasser redispergierbaren Polymerpulver-Zusammensetzungen nach Anspruch 1 bis 5 in bauchemischen Produkten, in Verbindung mit hydraulisch abbindenden Bindemitteln wie Zementen, Gips und Wasserglas.

8. Verwendung der in Wasser redispergierbaren Polymerpulver-Zusammensetzungen nach Anspruch 1 bis 5 für die Herstellung von Bauklebern, insbesondere Fliesenkleber und Vollwärmeschutzkleber, Putzen, Scim-coat, Spachtelmassen, Fußbodenspachtelmassen, Verlaufsmassen, Dichtschlämmen, Fugenmörtel, Farben, sowie Spritzmörtel und Spritzbeton für Bauwerke des Hoch- und Tiefbaues und die Auskleidung

9. von Tunnelwänden. Verwendung der in Wasser redispergierbaren Polymerpulver-Zusammensetzungen nach Anspruch 1 bis 5 als Hydrophobierungsmittel für Sand, Lehm, Papier, Textil, natürlichen oder synthetischen Fasern, sowie zur Modifizierung oder Beschichtung von Oberflächen.

## Claims

1. Water-redispersible polymer powder compositions, **characterized in that**
a) at least 60% by weight of one or more water-insoluble, film-forming base polymers based on homopolymers or copolymers of one or more monomers from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes and vinyl halides,
b) from 0.1 to 30% by weight of one or more fatty acid anhydrides and
c) from 1 to 30% by weight of one or more protective colloids, in each case based on the total weight of the polymer powder composition, are present.

2. Water-redispersible polymer powder compositions according to Claim 1, **characterized in that** one or more fatty acid anhydrides of branched or unbranched, saturated or unsaturated fatty acids having, in each case, from 8 to 22 carbon atoms are present.

3. Water-redispersible polymer powder compositions according to Claim 2, **characterized in that** unsymmetrical fatty acid anhydrides are present.

4. Water-redispersible polymer powder compositions according to Claim 3, **characterized in that** unsymmetrical fatty acid anhydrides of fatty acids having from 8 to 22 carbon atoms and carboxylic acids having from 2 to 6 carbon atoms are present.

5. Water-redispersible polymer powder compositions according to Claim 1 or 2, **characterized in that** symmetrical fatty acid anhydrides of saturated or unsaturated fatty acids having, in each case, from 10 to 18 carbon atoms are present.

6. Process for producing water-redispersible polymer powder compositions according to any of Claims 1 to 5, **characterized in that** mixtures of aqueous dispersions of the polymer a) and of the fatty acid anhydride b) in the presence of the protective colloid c) are dried.

7. Use of the water-redispersible polymer powder compositions according to any of Claims 1 to 5 in building chemical products in combination with hydraulically setting binders such as cements, gypsum plaster and water glass.

8. Use of the water-redispersible polymer powder compositions according to any of Claims 1 to 5 for producing building adhesives, in particular tile adhesives and thermal insulation adhesives, plasters and renders, scim coat, knifing fillers, flooring compositions, self-levelling screeds, sealing slurries, jointing mortars, paints and also gunned mortar and gunned concrete for building and construction and the lining of tunnel walls.

9. Use of the water-redispersible polymer powder compositions according to any of Claims 1 to 5 as hydrophobicizing agents for sand, clay, paper, textile, natural or synthetic fibres and for modifying or coating surfaces.

## Revendications

1. Compositions de poudres de polymères redispersables dans l'eau, **caractérisées en ce que** sont contenus
a) au moins 60 % en poids d'un ou plusieurs polymérisats de base filmogènes, insolubles dans l'eau, à base d'homopolymérisats ou de copolymérisats d'un ou plusieurs monomères choisis dans le groupe comprenant des esters vinyliques d'acides alkylcarboxyliques ramifiés ou non ramifiés ayant de 1 à 15 atomes de carbone, des esters d'acide méthacrylique et esters d'acide acrylique avec des alcools ayant de 1 à 15 atomes de carbone, des composés vinylaromatiques, des oléfines, des diènes et des halogénures de vinyle,
b) 0,1 à 30 % en poids d'un ou plusieurs anhydrides d'acides gras, et
c) 1 à 30 % en poids d'un ou plusieurs colloïdes protecteurs, chaque fois par rapport au poids total de la composition de poudre de polymère.

2. Compositions de poudres de polymères redispersables dans l'eau selon la revendication 1, **caractérisées en ce que** sont contenus un ou plusieurs anhydrides d'acides gras saturés ou insaturés, ramifiés ou non ramifiés, ayant chacun de 8 à 22 atomes de carbone.

3. Compositions de poudres de polymères redispersables dans l'eau selon la revendication 2, **caractérisées en ce que** sont contenus des anhydrides asymétriques d'acides gras.

4. Compositions de poudres de polymères redispersables dans l'eau selon la revendication 3, **caractérisées en ce que** sont contenus des anhydrides asymétriques d'acides gras ayant de 8 à 22 atomes de carbone et d'acides carboxyliques ayant de 2 à 6 atomes de carbone.

5. Compositions de poudres de polymères redispersables dans l'eau selon la revendication 1 ou 2, **caractérisées en ce que** sont contenus des anhydrides symétriques d'acides gras saturés ou insaturés ayant chacun de 10 à 18 atomes de carbone.

6. Procédé pour la préparation de compositions de poudres de polymères redispersables dans l'eau selon l'une quelconque des revendications 1 à 5, **caractérisé en ce qu'**on sèche des mélanges de dispersions aqueuses du polymérisat a) et de l'anhydride d'acide gras b), en présence du colloïde protecteur c).

7. Utilisation des compositions de poudres de polymères redispersables dans l'eau selon l'une quelconque des revendications 1 à 5 dans des produits chimiques pour le bâtiment, en conjonction avec des liants à prise hydraulique tels que des ciments, le plâtre et le verre soluble.

8. Utilisation des compositions de poudres de polymères redispersables dans l'eau selon l'une quelconque des revendications 1 à 5 pour la production de colles pour le bâtiment, en particulier de colles pour carreaux et de colles calorifuges, d'enduits, d'enduits de parement (skim-coat), de mastics, mastics pour sols, matières de nivelage, matériaux d'étanchéité, mortiers à joints, peintures, ainsi que mortier projeté et béton projeté pour des ouvrages du bâtiment et des travaux publics et l'habillage de parois de tunnels.

9. Utilisation des compositions de poudres de polymères redispersables dans l'eau selon l'une quelconque des revendications 1 à 5, en tant qu'agent d'hydrophobie pour sable, argile, textile, fibres naturelles ou synthétiques, ainsi que pour la modification ou le revêtement de surfaces.
